(19) Europäisches Patentamt
European Patent Office
Office européen des brevets

(11) EP 2 960 546 A1

(12) EUROPEAN PATENT APPLICATION

(43) Date of publication:
30.12.2015 Bulletin 2015/53

(51) Int Cl.:
*F16H 1/32* (2006.01) *F16H 1/28* (2006.01)

(21) Application number: 15460022.5

(22) Date of filing: 24.06.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 27.06.2014 PL 40868114

(71) Applicant: Robotyka.com
31-553 Krakow (PL)

(72) Inventor: Bydon, Stawomir
32-002 Wegrzce Wielkie (PL)

(74) Representative: Bartula-Toch, Marta
Biuro Techniczno-Prawne PATENT
ul. Boleslawa Chrobrego 2A/3
31-519 Krakow (PL)

# (54) ECCENTRIC GEARBOX

(57) The input element (11) in the gearbox takes the form of a roller whose end is eccentrically associated with the drive shaft (12) disposed via a bearing (8) in the external teeth rotary wheel (2), disposed eccentrically inside the internal teeth stationary wheel (1) fixed rigidly to the housing (10) or forming a monolith with the housing (10). The rotary wheel (2) is rigidly connected with the internal teeth rotary wheel (3), disposed eccentrically inside the internal teeth rotary wheel (4), which is rigidly connected to the output element (13). In any position the rotary wheel (2) is partially meshed with the stationary wheel (1) and the rotary wheel (3) is partially meshed with the rotary wheel (4) in any position.

The subject of the invention is a gearbox consisting of four gear wheels with parallel rotation axles. The first gear wheel has teeth directed inwardly, and is locked relative to the housing. The second gear wheel is meshed with the first one and its axis moves inside the first wheel with eccentric motion. The eccentric center of rotation is the rotation axis of the first wheel. The second and third wheels have a common axis of rotation and are mounted via a rotary bearing on the element which may move eccentrically. The third gear gear facing the outside is rigidly connected to a second wheel or the second and third wheels are formed as one piece. The third wheel is meshed with the fourth wheel, which has the teeth facing inward. The movement of the third wheel puts the fourth wheel in rotation. Pitch diameters of the wheels are selected so that the first and second wheel always mesh with each other and the third and fourth wheels also constantly mesh with each other.

There are solutions of gearboxes with the internal gear wheels, which are meshed with the external gear wheels, wherein the axis of the external gear wheel moves eccentrically with respect to the rotation axis of the internal gear wheel. In these structures, called cycloidal gearboxes, changing the movement of the gear wheels whose axles are moving eccentrically into the movement of the gearbox output elements moving with a rotational movement occurs via a number of eccentric rollers. The rotational movement of the eccentricity is caused by the rotation of the input shaft on which a gear wheel, engaged with the gear wheels mounted on the eccentric rollers (usually there are two or more rollers), is mounted, which requires very precise machining of all the elements of the kinematic chain in order to obtain a small clearance in the gearbox. Examples of such gearboxes are products by Nabtesco (www.nabtesco.pl). A gear wheel of such a gearbox, whose axis eccentrically has cycloidal teeth and rotates by one tooth at a full rotation of the elements putting its axis in the eccentric movement. In turn, in cycloidal gearboxes, such as products by Sumitomo (www.sumitomodrive.com), the transmission of the drive from the wheel moving eccentrically onto the output wheel of the gearbox occurs via a number of pins moved by appropriately shaped holes in the wheels, whose axles are moving eccentrically.

A gearbox according to the invention is characterized in that the input element of the gearbox causes direct eccentric movement of the axle of two gear wheels connected together, their axles of rotation are shared and move together eccentrically within two other internal gear wheels. One of the internal gears is locked relative to the housing. The axis of rotation of the eccentric coincides with the axis of the internal gear wheel. The movement of the fourth gear wheels is the output movement of the gearbox and due to that construction the rotational speed thereof is changed in relation to the rotational speed of the input element. Pitch diameters of the wheels must be selected so that the wheels placed

inside are constantly meshed with the corresponding wheels located on the outside. The advantage of such a solution is a considerable simplification of the construction of the gearbox (no additional components which convert the rotational movement into the eccentric one) and the possibility of achieving very high gear ratios.

Racks, whose axles are moving eccentrically for one full revolution of the eccentric exercise a revolution by the number of teeth being the difference between the number of teeth and the number of teeth of the gear wheel meshing with it.

It is obvious that the gearbox can operate in other configurations than those described above; the housing 1 and element 13 can rotate, and the element 11 can be locked or element 13 can be locked and elements 1 and 11 can rotate.

The solution according to the invention is shown schematically in Fig. 1 and in Fig. 2. The numbering of the elements in both figures is consistent.

The internal gear wheel 1 is fixedly mounted in the housing 10. The internal gear wheel 4 is rotatably mounted in the housing 10 via the bearing 9. The bearing 9 may be attached to a rack or another element to which the rack is attached (e.g. to element 13). The external gear wheel 2 is meshed with the gear wheel 1. The external gear wheel 3 is meshed with the gear wheel 4. Wheels 2 and 3 are rigidly connected together and are formed as one piece. Wheels 2 and 3 are mounted on the element 12 by means of the bearing 8. The element 12 is eccentrically attached to the element 11. The element 11 is an input element of the gearbox. Rotation of the element 11 causes eccentric movement of element 12 and the eccentric movement of axis of the wheels 2 and 3. The element 11 may not be present in the gear structure and the eccentric movement of the element 12 may be caused by the element belonging to another device, e.g. drive motor shaft. The movement of the wheel 2 is forced by the eccentric movement of the axis of rotation and its meshing with the wheel 1 locked relative to the housing 10. The movement of the gear wheel 3 is forced directly by the movement of the gear wheel 2 because they are rigidly connected and are formed as one piece. The axles of rotation of the wheels 2 and 3 overlap. Movement of the wheel 3 causes the rotation of the wheels 4 meshed therewith. Movement of the wheel 4 is transmitted to the output element 13 of the gearbox rigidly attached thereto, which may be the shaft or disk, or the element of another shape or may not exist at all. Due to the fact that the axles of gears 2 and 3 move eccentrically preferred, but not imperative due to the functionality of the transmission is to attach the weights 5 or 6 to the elements 11 or 12 in order to balance the gearbox. Balancing the gearbox can also be performed by attaching the additional external gear wheel moving eccentricity opposite to the eccentricity of the element 12 and meshed with the wheels 1 or 4 balancing in this way the weight of the wheels 2 and 3. The bearings 7, 8 and 9 may be rotary, slide, ball, roller, needle or others bearings and may be installed in other places than those shown in the figure. Pitch diameters of the wheels 1, 2, 3 and 4 are $d_1$, $d_2$, $d_3$ and $d_4$, respectively and their number of teeth is $z_1$, $z_2$, $z_3$ and $z_4$, respectively. Gear ratio i depends on the number of teeth in the wheels and is expressed by formula No 1:

$$i = \frac{1}{1 - \frac{z_1 \cdot z_3}{z_2 \cdot z_4}} = \frac{z_2 \cdot z_4}{z_2 \cdot z_4 - z_1 \cdot z_3} \qquad (1)$$

According to formula 1, depending on the number of teeth in the gear wheels, the gearbox can reduce the number of rotations or multiply it. It may also change the direction of rotation to the opposite. Moving e the axis of rotation of the eccentricity of the member 12 relative to the axis of the gear wheels 1 and 4 is expressed by formula No 2:

$$e = \frac{d_1 - d_2}{2} = \frac{d_4 - d_3}{2} \qquad (2)$$

According to formula 2 a condition for a proper operation of the gearbox is a fulfilled equation of pitch diameter differences of the wheels 1 and 2 and wheels 3 and 4, respectively. This is due to the fact that the wheels 2 and 3 are connected to each other and eccentric movement of their axles are equal while the wheels 2 and 3 must be permanently meshed with the wheels 1 and 4, respectively. The gearbox can also be operated with unfulfilled equation 2 but the condition of its operation is for the teeth of gear wheels 1 and 2, and 3 and 4 to mesh. It is easy to construct the element which would eccentrically move the axles of the second and third wheel e allowing any adjustment of the clearances between the gearbox wheels.

According to formula 1 the condition for changing the rotary speed of the gearbox 1 input element 11 relative to the input element of the gearbox is for the pair of wheels 1 and 2 and 3 and 4 to have different ratios relative to each other. So that the equation no. 3 could be fulfilled:



(Cont. next page)

$$\frac{z_1}{z_2} \neq \frac{z_3}{z_4} \quad (3)$$

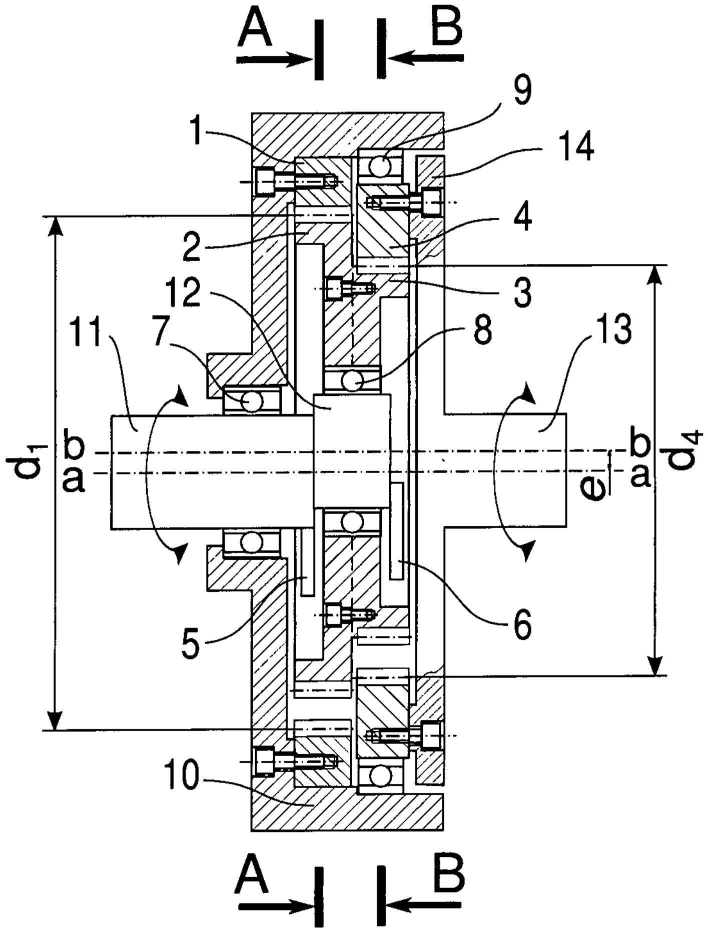


Fig. 1.

## Description

The subject of the invention is a two-stage eccentric gearbox

There are solutions of gearboxes with internal teeth gear wheels, which are meshed with external gear wheels, wherein the axis of the external teeth gear wheel moves eccentrically with respect to the rotation axis of the internal teeth gear wheel. In these structures, called cycloidal gearboxes, replacing the movement of the gear wheels, whose axles are moving eccentrically, into the movement of the gearbox output elements moving with a rotational movement occurs via a number of eccentric rollers. The rotational movement of the eccentricity is caused by the rotation of the input shaft on which a gear wheel, engaged with the gear wheels mounted on a couple of eccentric rollers, is mounted, which requires very precise machining of all the elements of the kinematic chain in order to obtain a small clearance in the gearbox. Examples of such gearboxes are products by Nabtesco. A gear wheel of such a gearbox, whose axis eccentrically has cycloidal teeth and rotates by one tooth at a full rotation of the elements putting its axis in the eccentric movement. An example may be also gearboxes by Sumitomo, in which the transmission of the drive from the wheel moving eccentrically onto the output wheel of the gearbox occurs via a number of pins moved by appropriately shaped holes in the wheels, whose axles are moving eccentrically.

A patent description PL181557 shows an eccentric - planetary gearbox, consisting of a pair of external teeth gear wheels, a pair of internal teeth gear wheels, radial - axial bearing in housings, gear body and drive motor attached thereto. The motor drives the driving gears secured to the housing of radial - axial bearings. The bearing has a race on the external teeth gear wheel that is mounted on the output shaft. The bearing mounted eccentrically in the housing has a pair of internal teeth gear wheels secured, which because of their eccentric mounting surround the external teeth gear wheels with their gearing. A gear wheel is secured in the body in which an output shaft is mounted.

The essence of the solution according to the invention consists in the fact the that input element disposed in the gearbox takes the form of a roller whose end is eccentrically associated with the drive shaft disposed via a bearing in the small external teeth rotary wheels. The first rotary wheel is placed eccentrically inside an internal teeth stationary wheel, fixed rigidly to the housing or forming a monolith with the housing. Rotary wheel is rigidly connected to the second external teeth rotary wheel or forms a monolith with it. The second small rotary wheel disposed eccentrically within a large internal teeth rotary wheel, which in turn is rigidly connected to the output element or forms a monolith with it. In any position a stationary wheel is partially meshed with the first small rotary wheel and the second small rotary wheel is partially meshed with a large third rotary wheel in any position. An input and the output element are arranged on a common axis.

Preferably, all the wheels have teeth with involute contour.

Preferably, the drive shaft is mounted in the axis of rotation of the output element which is connected with the fourth wheel and is mounted directly on the fourth wheel.

Preferably, the drive shaft is mounted in the axis of rotation in the housing or is mounted directly on the first stationary wheel.

Preferably, the input element is a part of a gearbox or is the outer element disposed in the gearbox.

Preferably, the input element is a shaft of the motor driving the gearbox.

Preferably, the input element is provided with a counterweight.

Preferably, the drive shaft is provided with a counterweight.

Preferably, the value of the drive shaft eccentricity is adjustable.

The advantage of the above-mentioned gearbox is a simple structure, creating the possibility of its modification, such as the housing or the output element many be rotary and the input element may be stationary and the output element may be stationary and the input element and the first gear wheel may be rotary.

A significant advantage is the ability to convert the function of the input element into an output one, and thus the output element into the input element, so it can reduce the number of revolutions or multiply it, moreover the gearbox design allows for high values of gear ratios and changing the direction of rotation of the rotating elements.

The gearbox according to the invention is explained in more detail in the embodiment illustrated in the drawings, wherein Figure 1 is a longitudinal axial sectional view of the gearbox, whose external teeth gear wheels 2 and 3 are connected to each other with screws, Figure 2 - a longitudinal axial sectional view of the gearbox, whose external teeth gear wheels 2 and 3 are a monolith, Figure 3 - a A - A cross-section of the gearboxes marked on Figure 1 and Figure 2, Figure 4 - a B - B cross-section, marked on Figure 1 and 2

The housing 10 has an approximate form of a short cylinder closed at the drive side with a circular, axially located aperture in which ball roller bearing 7 is mounted, in which a rotary cylindrical input element 11 mounted, being a shaft of the electric drive motor secured outside. Inside the housing the input element 11 transforms eccentrically into a drive shaft 12. A counterweight 5 is secured to the element 11, and counterweight 6 is attached to the drive element 12, for balancing the gearbox, which is justified by the fact that the rotary wheels 2 and 3 rotate eccentrically.

Internal teeth stationary wheel 1, with a partially meshed external teeth rotary wheel 2 inside, bolted to the external teeth rotary wheel 3, is screwed to the housing 10 from the inside. Integrated rotary wheels 2 and 3 are mounted using a joint ball rolling bearing 8, on the drive shaft 12. External teeth rotary wheel 3 is disposed inside the internal teeth rotary wheel 4, wherein rotary wheels 3 and 4 are partially meshed with each other. All wheels 1, 2, 3 and 4 have teeth with involute contour. Rotary wheel 4 is stabilised within the housing 10 using a ball rolling bearing 9, and a rotary disc 14, which in the central part transforms into the output element 13 in the form of a shaft, is secured thereto with screws. The input element 11 and output element 13 have a common axis a - a, and the drive shaft 12 and rotary gear wheels 2 and 3 have a common axis b - b.

Operation of the gearbox lies in the fact that the input element 11, which is the electric drive motor shaft, transmits the rotary movement on an eccentrically located drive shaft 12, transmitting the centric rotary movement from axis a - a into the rotary movement of the gear wheels 2 and 3 located eccentrically on the axis b - b with the offset by the value e in relation to axis a - a. Eccentric movement of the wheel 2 is transmitted on the wheel 3 attached thereto, as it was shown in Figure. 1 or on the wheel 3 creating a monolith with it, as was shown in Figure 2 of the drawing. It is preferable for the gearbox operation to balance the input element 11 using the counterweight 5 or the drive shaft 12 using the counterweight 6.

The value of eccentricity e, so the offset of axle b - b in relation to axle a - a is expressed by a formula (1):

$$d_1 - d_2 \qquad d_3 - d_4$$

According to formula (1) a condition for a proper operation of the gearbox is a fulfilled equation of pitch diameter differences of the wheels 1 and 2 and wheels 3 and 4, respectively. This is due to the fact that the wheels 2 and 3 are connected to each other and eccentric movement of their axles are equal while the wheels 2 and 3 must be permanently partially meshed with the wheels 1 and 4, respectively.

Based of the number of teeth $z_1$, $z_2$, $z_3$ and $z_4$ of wheels 1, 2, 3 and 4, accordingly the gear ratio is calculated according to the formula (2):

$$i = \frac{1}{1 - \frac{z_1}{z_2} \cdot \frac{z_3}{z_4}} = \frac{z_2 \times z_4}{z_2 \times z_4 - z_1 \times z_3}$$

According to formula (2) the condition for changing the rotary speed of the input element 11 relative to the output element 13 is for the pair of wheels 1 and 2 and 3 and 4 to have different ratios relative to each other, as shown in the following inequality (3):

$$\frac{z_1}{z_2} \neq \frac{z_3}{z_4}$$

**The list of designations**

| | |
|---|---|
| 1 | - internal teeth stationary gear wheel, |
| 2 | - external teeth rotary gear wheel, |
| 3 | - external teeth rotary gear wheel, |
| 4 | - internal teeth rotary gear wheel, |
| 5 | - weight - counterweight, |
| 6 | - weight - counterweight, |
| 7 | - input shaft bearing 12, |
| 8 | - bearing of gear wheels 2 and 3, |
| 9 | - bearing of a gear wheel 4, |
| 10 | - gearbox housing, |
| 11 | - an input element in the form of a shaft, |
| 12 | - a drive shaft located eccentrically relative to the input element 11, |
| 13 | - a rotary output element, |
| 14 | - disc of the output element 13, |
| $d_1$ | - pitch diameter of the stationary wheel 1, |
| $d_2$ | - pitch diameter of the rotary wheel 2, |
| $d_3$ | - pitch diameter of the rotary wheel 3, |
| $d_4$ | - pitch diameter of the rotary wheel 4, |
| $z_1$ | - number of teeth of the stationary wheel 1, |
| $z_2$ | - number of teeth of the rotary wheel 2, |
| $z_3$ | - number of teeth of the rotary wheel 3, |
| $z_4$ | - number of teeth of the rotary wheel 4, |
| a - a | - centric axis of the input element 11 and rotary output element 13, |
| b - b | - the axis of eccentrically disposed drive shaft 12 and rotary gear wheels 2 and 3, |
| e | - offset of the axis b - b in relation to axis a - a. |

**Claims**

1. Eccentric gearbox, consisting of the casing, in whose central part an input element is preferably disposed, and on the other side the output element is placed, wherein the input element is rotary connected with two pairs of gear wheels of various diameters, wherein each pair consists of internal teeth wheel and one external teeth wheel, disposed eccentrically in one another, **characterized in that** the inlet element (11) in the part located in the gearbox has a form of a roller whose end is eccentrically associated with the drive shaft (12), disposed via a bearing (8) in the external teeth rotary wheel (2), disposed eccentrically inside the internal teeth stationary wheel (1) fixed rigidly to the housing (10) or forming a monolith with the housing (10) and rotary wheel (2) which is rigidly connected with the internal teeth rotary

wheel (3) or forms a monolith with the rotary wheel (3) disposed eccentrically inside the internal teeth rotary wheel (4), which in turn is rigidly connected with the output element (13), wherein in any position the stationary wheel (1) is partially meshed with the rotary wheel (2) and the rotary wheel (3) is partially meshed with the rotary wheel (4) in any position and the input element (11) and output element (13) are arranged on a common axis.

**2.** A gearbox according to claim 1, **characterized in that** the wheels 1, 2, 3 and 4 have teeth with involute contour.

**3.** A gearbox according to claim 1, **characterized in that** the drive shaft (12) is mounted in the axis of rotation of the output element (13) which is connected with the wheel (4) and is mounted directly on the wheel (4).

**4.** A gearbox according to claim 1, **characterized in that** the drive shaft (12) is mounted in the axis of rotation in the housing (10) or is mounted directly on the gear wheel (1).

**5.** A gearbox according to claim 1, **characterized in that** the input element (11) is a part of a gearbox or is the outer element disposed in the gearbox.

**6.** A gearbox according to claim 5, **characterized in that** the input element (11) is a shaft of the motor driving the gearbox.

**7.** A gearbox according to claim 1, **characterized in that** the input element (11) is provided with the counterweight (5).

**8.** A gearbox according to claim 1, **characterized in that** the drive shaft (12) is provided with the counterweight (6).

**9.** A gearbox according to claim 1, **characterized in that** the value of the drive shaft (12) eccentricity (e) is adjustable.

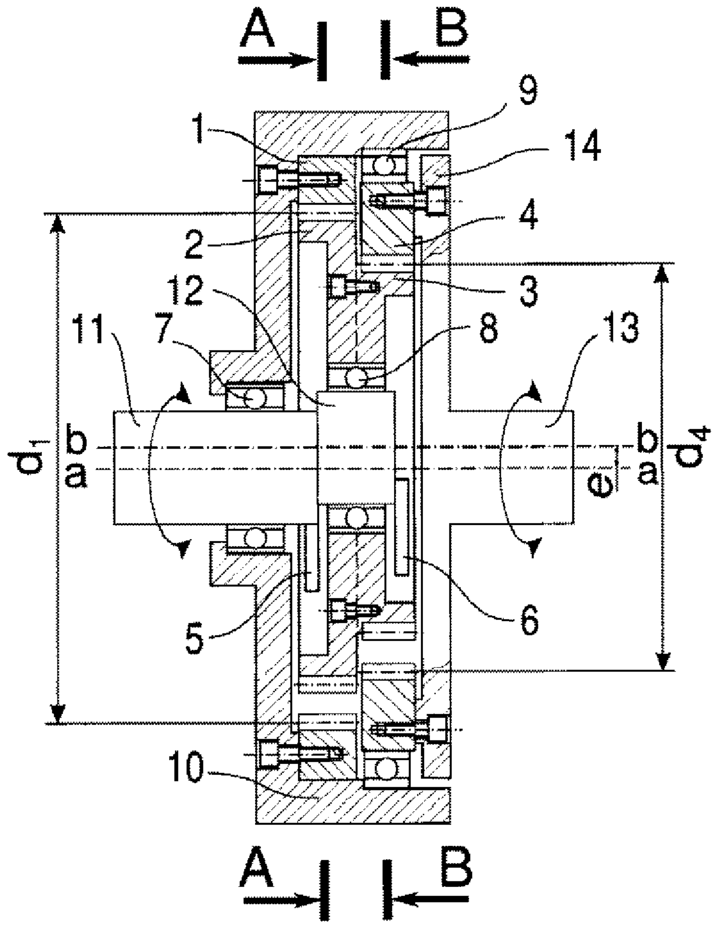


Fig. 1.

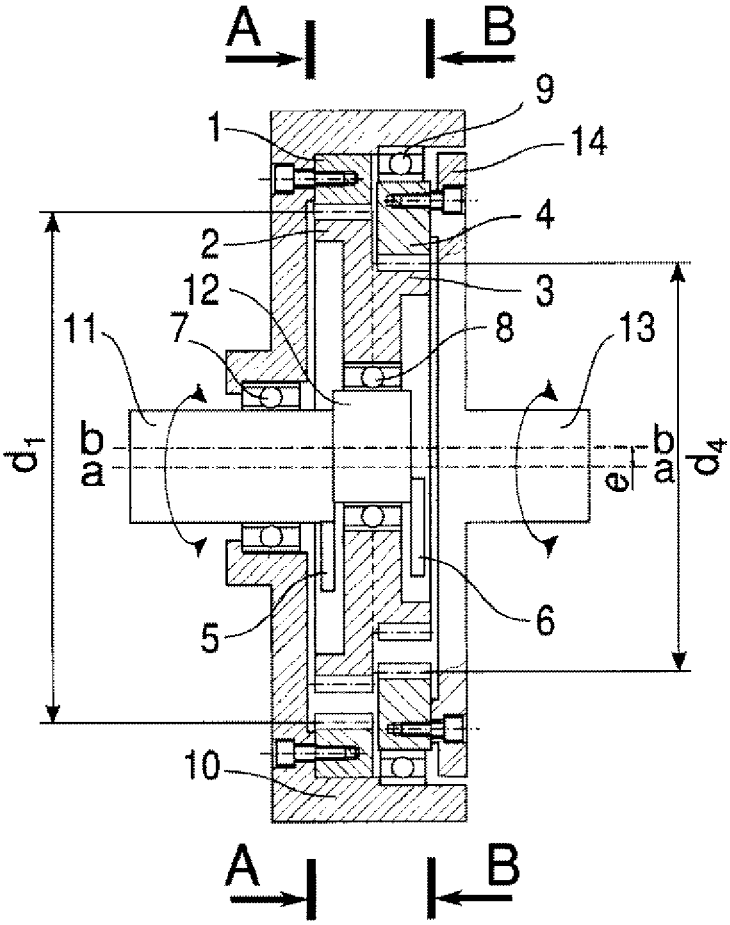


Fig. 2.

A-A:

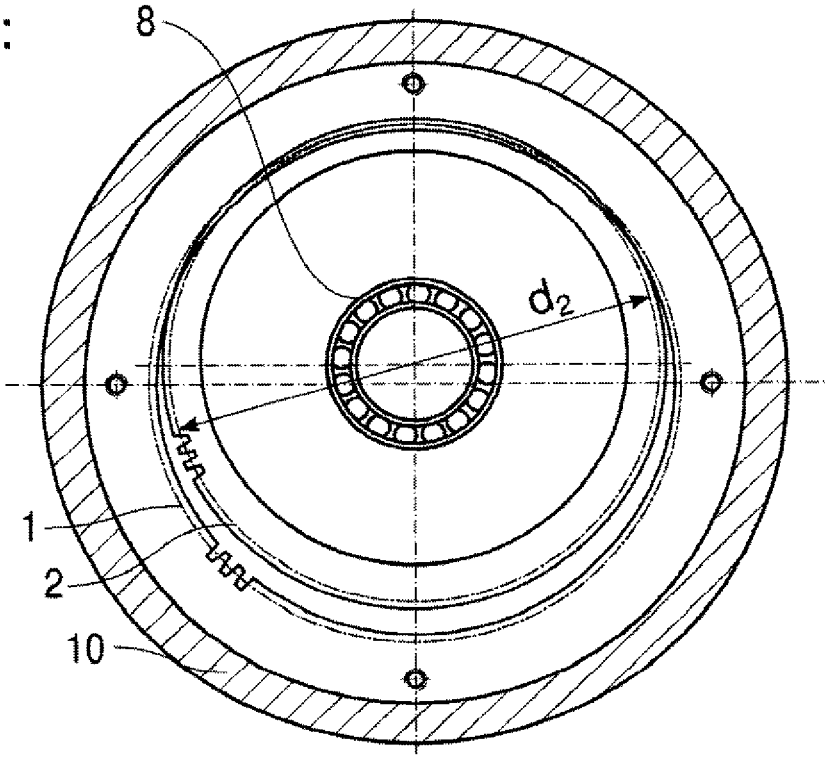


Fig. 3.

B-B:

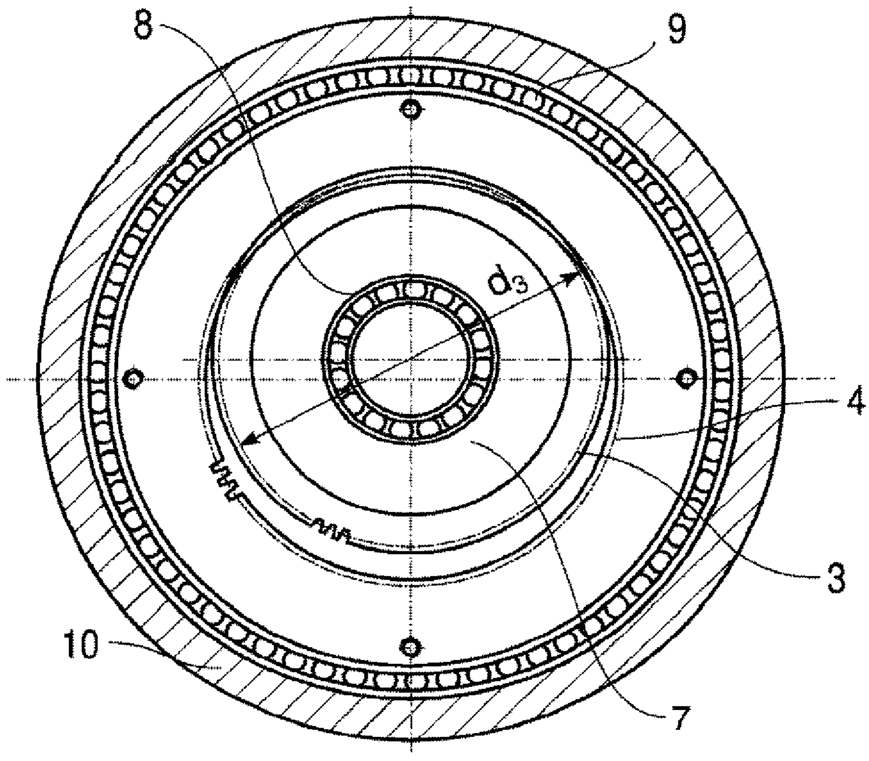


Fig. 4.

Europäisches Patentamt
European Patent Office
Office européen des brevets

# EUROPEAN SEARCH REPORT

Application Number
EP 15 46 0022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 657 131 A1 (NADEAU JEAN PAUL [FR]) 19 July 1991 (1991-07-19) * page 9, lines 9-35 * * figure 7 * | 1-5,8,9 | INV. F16H1/32 ADD. F16H1/28 |
| X | US 4 014 224 A (PITTS DALLAS L) 29 March 1977 (1977-03-29) * column 3, lines 32-45 * * column 5, lines 54-64 * * column 6, line 38 - column 7, line 30 * * claim 1 * * figures 1-3 * | 1-6,8,9 | |
| X | DE 23 32 842 A1 (LEITER JULIUS) 16 January 1975 (1975-01-16) * page 4, line 28 - page 5, line 11 * * claim 2 * * figure 1 * | 1-5,7-9 | |
| X | EP 1 120 583 A1 (BARANGER CLAUDE [FR]) 1 August 2001 (2001-08-01) * paragraphs [0006], [0008] * * claim 1 * * figure B * | 1-6,8,9 | TECHNICAL FIELDS SEARCHED (IPC) |
| X | US 5 505 668 A (KORIAKOV-SAVOYSKY BORIS A [UA] ET AL) 9 April 1996 (1996-04-09) * column 2, lines 27-63 * * figures 1,2 * | 1,3-5,7,9 | F16H H02K |
| X | FR 613 071 A (VIEUX-VINCENT LAURENT-HENRI) 8 November 1926 (1926-11-08) * page 1, line 56 - page 2, line 30 * * figures 4-5 * | 1,2,4-6,8,9 | |
| X | DE 44 22 492 A1 (TEVES GMBH ALFRED [DE]) 26 January 1995 (1995-01-26) * column 3, line 60 - column 4, line 2 * * figure 2 * | 1,2,4-6,9 | |

The present search report has been drawn up for all claims

1

| Place of search | Date of completion of the search | Examiner |
|---|---|---|
| The Hague | 9 October 2015 | Truchot, Alexandre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 15 46 0022

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2015

| Patent document cited in search report | Publication date | Patent family member(s) | Publication date |
|---|---|---|---|
| FR 2657131 A1 | 19-07-1991 | NONE | |
| US 4014224 A | 29-03-1977 | NONE | |
| DE 2332842 A1 | 16-01-1975 | NONE | |
| EP 1120583 A1 | 01-08-2001 | EP 1120583 A1 | 01-08-2001 |
| | | FR 2804191 A1 | 27-07-2001 |
| US 5505668 A | 09-04-1996 | CA 2129188 A1 | 30-01-1996 |
| | | US 5505668 A | 09-04-1996 |
| | | WO 9604493 A1 | 15-02-1996 |
| FR 613071 A | 08-11-1926 | NONE | |
| DE 4422492 A1 | 26-01-1995 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- PL 181557